# EUROPEAN PATENT SPECIFICATION

(11) **EP 2 578 179 B1**
(45) Date of publication and mention of the grant of the patent: **13.03.2019**
(21) Application number: 11786000.7
(22) Date of filing: 29.03.2011
(51) Int. Cl.: A61C 1/05, A61C 1/14, A61C 1/16, A61C 1/12

(54) **DENTAL TURBINE DRILL**
ZAHNÄRZTLICHER TURBINENBOHRER
FRAISE DENTAIRE À TURBINE

(30) Priority: 25.10.2010 CN 201020575024 U; 09.10.2010 CN 201020554215 U; 27.09.2010 CN 201020542727 U; 20.09.2010 CN 201020536479 U; 07.09.2010 CN 201020519642 U; 01.09.2010 CN 201010268696; 26.05.2010 WO PCT/CN2010/073256
(43) Date of publication of application: 10.04.2013
(73) Proprietor: Zhengzhou Zezheng Technical Services Ltd., Zhengzhou, Henan 450000 (CN)
(72) Inventor: ZHANG, Chun, Zhengzhou, Henan 450000 (CN); LIU, Xiaoxia, Zhengzhou, Henan 450000 (CN)
(74) Representative: Intès, Didier Gérard André
(86) International application number: PCT/CN2011/072262
(87) International publication number: WO 2011/147228

(56) References cited:
- EP-A1- 0 497 139
- EP-A1- 1 982 667
- CN-A- 1 306 804
- CN-A- 1 456 129
- CN-A- 1 887 237
- CN-Y- 2 510 028
- CN-Y- 200 973 753
- DE-A1-102004 011 314
- US-A- 5 308 242
- US-A- 5 334 013
- US-A- 5 733 120
- US-A- 5 810 588
- US-A- 5 902 108

## Description

### FIELD OF TECHNOLOGY

The present invention belongs to the field of handheld instruments in dentistry, and relates to a dental turbine drill.

### BACKGROUND ART

In general, a head for an air-type cutting device used in dentistry is provided with a head part at the top thereof, the required components of a cutting tool being built into the head part, where the components comprise a rotor shaft of the cutting tool, two bearings supporting the shaft rotation, and an impeller arranged between the two bearing parts; high-pressure air supplied via an air supply route arranged within a handle part of the head impacts the impeller to rotate the cutting tool. However, in an air-type cutting device having the described structure, since the head extends into the oral cavity, lamp light is prone to being blocked, resulting in an inconvenient operation; in a conventional handheld drill provided with a lamp, the lamp light cannot be directly emitted from the drill head, and the anti-suck-back mechanism is complex, among other problems. More specifically, the prior art has the following disadvantages:
(1) The structure for preventing suck-back is complex, or makes usage inconvenient;
(2) Thus far, a switch has been provided on an air inlet channel of the rear section, which reduces the air intake pressure and affects the rotational speed;
(3) Providing a conductive surface on an elastic membrane is expensive and requires a complex process;
(4) The lamp, power source, and switch are far apart from each other, resulting in a setup that is not compact and is susceptible to problems;
(5) A conventional pressing mechanism for a push button dental drill has a complex structure and numerous components, requires sealing, and is expensive;
(6) There are no plastic pressing mechanisms available. Conventional plastic shaft-coupling turbines without pressing mechanisms are low in mass, low in moment of inertia, and do not run smoothly during operation.
   With conventional pressing mechanisms, materials are expensive, manufacturing processes are complex, and prices are high. This is especially true for a coil spring in a pressing mechanism, which requires high-quality materials and thus has long necessitated importation at high prices.
(7) All conventional dental drills have had a dedicated channel for atomizing water, and having this additional channel complicates the production processes and increases materials, thus leading to higher prices;
(8) The inside of a conventional handle contains a tube, which is difficult to install; the handle wall lacks a support and is very thick, and moreover there are a limited number tubes that can be accommodated.

US5308242 discloses a disposable handpiece for dental procedures.

US5733120 discloses a dental handpiece capable of stably supporting a turbine.

EP0497139 discloses a head for handpiece and a handpiece especially for dental surgery.

EP1982667 discloses a fluid driven medical, in particular dental, handpiece.

US5902108 discloses an air turbine handpiece.

DE102004011314 discloses an element a dental instrument.

### DISCLOSURE OF THE INVENTION

It is a general objective of the present invention to provide a disposable push button dental turbine drill that is practical, inexpensive, requires simple manufacturing processes, prevents suck-back, and is self-illuminating. The general inventive concept is to use more inexpensive materials and to reduce the volume occupied by components. To meet this goal the following objectives must be met:
A first objective of the present invention is to provide a dental turbine drill which is small in volume, can be installed onto a lower air outlet channel, and uses air flow as a power switch.

A second objective of the present invention is to provide a structurally simple anti-suck-back turbine drill.

A third objective of the present invention is to provide a turbine drill which can prevent suck-back and has a low-volume switch.

A fourth objective of the present invention is to provide a turbine drill in which an elastic membrane is not a conductor or in which an elastic membrane does not affix a conductor.

A fifth objective of the present invention is to provide a turbine drill in which a power source, switch, and lamp are connected in a compact manner, and occupy little volume.

A sixth objective of the present invention is to provide a turbine drill having a structurally simple, inexpensively produced dental drill pressing mechanism.

A seventh objective of the present invention is to provide a drill configured with a pressing mechanism that runs smoothly, has simple manufacturing processes, and is inexpensive.

An eighth objective of the present invention is to obviate the need for a dedicated air jet channel for atomized water vapor, and at the same time to do so without lower atomization efficacy.

A ninth objective of the present invention is to provide a dental drill for a handle with a simple structure in which the handle is thin-walled, sturdy, and at the same time is still able to satisfy the needs of present and future usage.

In order to solve the aforementioned problems, the present invention, as defined in claim 1, employs the following technical scheme:
A dental turbine drill comprises a handle and a head that is connected to the handle, the head being constituted of a head housing and a core that is arranged within a cavity of the head housing, and the head housing being constituted of a head housing wall and a head housing covering, the core being constituted of a connecting shaft turbine and an upper bearing and a lower bearing that are fitted at corresponding upper and lower sites on a turbine shaft of the connecting shaft turbine, the upper bearing and the lower bearing being placed onto corresponding bearing seats inside the head housing, where a turbine cavity is formed between the upper bearing and the lower bearing, the turbine cavity being provided with an air supply channel and an air return channel, and upper part of the upper bearing seat is an upper air outlet channel and a lower part of the lower bearing seat is a lower air outlet channel; the site of the connection between the handle and the head housing is a handle neck, both the head housing and the handle being made of a plastic material.

In the dental turbine drill, a LED surface mount lamp is arranged on the outer periphery of a bur socket on the outside of the head housing wall, and the LED surface mount lamp is connected to a power source and a switch, the switch referring to a pneumatic membrane switch provided on the lower air outlet channel.

In the dental turbine drill, the pneumatic membrane switch is constituted of two membrane rings that are isolated from an annular isolation layer I by a distance that corresponds to the annular isolation layer I, projecting blades being arranged in the direction of the ring center of the two membrane rings, where the pneumatic membrane switch is configured to open and close by the contact and separation of the two corresponding projecting blades

In the dental turbine drill, a ring center extremity between the two projecting blades affixes an isolation layer II.

In the dental turbine drill, the ring width of the two membrane rings isolated from the annular isolation layer I is greater than the ring width of the annular isolation layer I, and a T-shaped slit is provided toward the ring center direction along the inside of the annular isolation layer I along the two membrane rings. The projecting blades are configured between the two neighboring T-shaped slits.

In the dental turbine drill, an annular one-way valve is fixed onto the air outlet channels, the annular one-way valve being an annular stretched elastic membrane. In the natural state, a center hole of the annular stretched elastic membrane holds onto the turbine shaft or holds onto the bur, and in the working state, the center hole of the annular stretched elastic membrane is blown away from the turbine shaft or is blown away from the bur.

In the dental turbine drill, the annular stretched elastic membrane is a soft silicone rubber. polyurethane, latex, or ordinary rubber.

In the dental turbine drill, in the natural state, a portion of the lower surface of the annular stretched elastic membrane separates from the internal parts of the head, and in an air expelling state, that portion is in contact with the internal parts of the head, whereby the site of contact between the inside of the head and that portion of the lower surface of the annular stretched elastic membrane constitutes a switch.

In the dental turbine drill, a conductor is arranged on the lower surface of the annular stretched elastic membrane. The conductor is distributed radially and has an annular connection to the outer peripheral edge of the annular stretched elastic membrane. A conductor is arranged at the site of contact with the corresponding components inside the head.

In the dental turbine drill, the annular stretched elastic membrane at the site to which the conductor corresponds is thicker, and forms a convexity, while the site where the conductor is not arranged is thinner, and forms a recess.

In the dental turbine drill, an annular pressure membrane switch is arranged under the annular stretched elastic membrane.

In the dental turbine drill, the annular pressure membrane switch refers to at least two isolation points arranged between an upper elastic ring and a lower elastic ring; the sites where there is no isolation point contact each other when subjected to pressure but are separated in the natural state, thus constituting the pressure membrane switch.

In the dental turbine drill, the elastic membrane is thicker around the periphery of the center hole, thus forming an annular stand ring. A pressure block thinner than the annular stand is arranged on the outside of the annular stand ring, and a top part connects the annular stand ring and the pressure block, while the lower parts thereof are separated. The pressure block corresponds to a site of the annular membrane switch where no isolation point is arranged.

In the dental turbine drill, the LED lamp and switch are arranged on a site on the head, and at least a portion of a power source assembly is arranged on a site on the head.

In the dental turbine drill, an annular battery power source is arranged inside the head.

In the dental turbine drill, a button battery or a pin type battery power source is arranged on one side of the neck of the head.

In the dental turbine drill, the turbine drill is a push button turbine drill, and the material of the head covering is a rubber-like substance. The rubber-like substance of the head covering is tightly clamped by a clamp on an upper part of the head housing wall.

In the dental turbine drill, the rubber-like substance of the head covering is a silicon rubber, polyurethane, latex, or ordinary rubber.

In the dental turbine drill, the turbine drill is a push button turbine drill, and a burr push button clamping mechanism thereof is a tapered hole arranged in the center hole of the turbine shaft, a clamping jaw being provided within the center hole of the turbine shaft; along the axial direction of the clamping jaw along the turbine shaft is a wedge shape that is mated to the tapered hole, and an upper part of the clamping jaw and a connecting rod are integrally fixed together. A spring retaining board and the center hole of the turbine shaft, which extends out from the upper part of the connecting rod, are integrally fixed together, And a spring is provided between the turbine shaft and the spring retaining board on the outside of the connecting rod. The turbine shaft, the clamping jaw, the connecting rod, and the elastic spring are all plastic pieces.

In the dental turbine drill, the spring retaining board is an inertia plate.

In the dental turbine drill, the spring is a butterfly spring or a leaf spring.

In the dental turbine drill, the butterfly spring or the leaf spring is arranged so as to have a relative snap superposition.

In the dental turbine drill, the butterfly spring is a grooved butterfly spring, or the leaf spring is a grooved leaf spring.

In the dental turbine drill, when the clamping jaw has clamped onto the bur, an upper end of the center hole of the turbine shaft communicates to the lower end thereof.

In the dental turbine drill, a sealing ring is arranged between the connecting rod and the turbine shaft center hole. A return air channel II that communicates with the return air channel is arranged on the upper air outlet channel

In the dental turbine drill, a water ejection hole is arranged on the lower air outlet channel.

In the dental turbine drill, a water ejection hole is arranged on the upper air outlet channel or on the upper and lower air outlet channels.

In the dental turbine drill, a water ejection channel of the water ejection hole is arranged in the head housing wall and at the neck of the handle.

In the dental turbine drill, within the handle are grid channels arranged along the axial direction of the handle; the grid channels communicate individually with the head and with channels corresponding to the handle plug.

In the dental turbine drill, at least one grid channel is an air inlet channel, and an air inlet pipe channel extending from the grid channel at the neck part communicates with the air inlet channel of the head, while an air inlet pipe channel extending from the rear part of the handle communicates with the air inlet channel of the handle plug. At least one grid channel is a water inlet channel, and a water inlet pipe channel extending from the grid channel at the neck part communicates with a water inlet channel, while a water inlet pipe channel extending from the rear part of the handle communicates with the water inlet channel of the handle plug.

The present invention, which adopts the aforementioned technical scheme, has the following advantages:
(1) The described films can be polyester (PET), polyvinyl chloride (PVC), or polysulfide acetate or the like. Such films are very thin, generally about 10 filaments, or 100 microns, enabling a very thin switch. The thickness of the LED surface mounting piece is also not large. This makes it possible to implement switching under circumstances whereby the size of the head is minimally increased, and to arrange the lamps uniformly on the head.
(2) By employing the annular stretched elastic membrane, which can not only act as a washer but also can prevent suck-back, the present invention makes it possible to maintain the original size of the dental drill, without an increase in volume, since only the original washer position is occupied.
(3) By using a membrane switch, the present invention makes possible an anti-return-air membrane on the air outlet channel that is simultaneously a membrane switch component, thus achieving the purpose of preventing suck-back while still occupying only a small volume.
(4) To make an electroconductive elastic membrane, adding silver powder to a rubber is very costly, while adding carbon powder reduces elasticity; therefore a scheme in which an elastic membrane is used to package an electroconductive material to serve as a push button key requires a complex process and results in a somewhat greater volume. However, using the elastic membrane as the pressing force of the pressure membrane switch is a simple process with low costs that uses little space and meets requirements.
(5) In the present invention, the power source, or a portion of the power source, the switch, and the lamp are all disposed within the head, thus achieving the three objectives of compactness, connectedness, and low volume usage.
(6) By using rubber for the push button, the present invention makes it possible to forgo a spring and other sealing members, and thus the structure is simple and costs are low.
(7) 4-mm inner diameter bearings are used for the bearings in the present invention, and this leads to a corresponding increase in the mass of the rotating members as well as an improvement in the ability to operate smoothly. Rubber is used as the component material for the pressing mechanism corresponding to the bearings, and this makes it possible to achieve the requirements for subjected force and also resolve the technical problems of a low-cost pressing mechanism, for which a solution has long been sought. The use of a butterfly spring or a leaf spring makes it possible to drastically reduce spring costs, and having the spring retaining board serve as an inertia disc also improves the ability to operate smoothly.
(8) Having the atomized water vapor spray on both the upper air outlet channel and the lower air outlet channel in the present invention and having a large amount of rotational air flow through such areas makes it possible to achieve even more effective water vapor atomization.
(9) Using a grid support in the handle of the present invention allows for the handle wall to be thin yet sturdy. At the same time, having the grid channels simultaneously serve as dental drill functional channels achieves a dual usage with a single component, and thus allows for a simple structure.

With consideration given to all of the aforementioned advantages, provided is a disposable push button dental turbine drill that is practical, inexpensive, prevents suck-back with a simple process, and is self-illuminating. Also advantageous is the use of inexpensive parts.

### BRIEF DESCRIPTION OF THE DRAWINGS

FIG. 1 is a cutaway schematic structural view of the head;
FIG. 2 is a cutaway schematic structural view along the B-B line in FIG. 1;
FIG. 3 is a cutaway schematic structural view of when the blades are in contact with the head;
FIG. 4 is a cutaway schematic structural view of when an isolating blade provided to the blade tip is in contact with the head;
FIG. 5 is a cutaway schematic structural view of when an isolating blade provided to the blade tip separates from the head;
FIG. 6 is a schematic view of a T-shaped slit;
FIG. 7 is a cutaway schematic structural view of the head when an annular stretched elastic membrane is fixed onto the air outlet channel;
FIG. 8 is a cutaway schematic structural view of the head when the annular stretched elastic membrane fixed onto the air outlet channel is blown open;
FIG. 9 is a cutaway schematic structural view of the head when the annular stretched elastic membrane is in contact with the upper surface of an LED lamp stand;
FIG. 10 is a view of a lower surface of the annular stretched elastic membrane;
FIG. 11 is a cutaway schematic structural view of the head when an annular pressure membrane switch is arranged below the annular stretched elastic membrane;
FIG. 12 is an enlarged schematic view of when the annular pressure membrane switch is provided below the annular stretched elastic membrane;
FIG. 13 is a cutaway schematic structural view along the J-J line in FIG. 12;
FIG. 14 is a cutaway schematic structural view along the K-K line in FIG. 12;
FIG. 15 is a schematic view of an annular battery provided within the head;
FIG. 16 is a cutaway schematic structural view of the head when a button battery is arranged in the neck part of the head;
FIG. 17 is an external view of a grooved butterfly spring;
FIG. 18 is an external view of a grooved leaf spring;
FIG. 19 is a cutaway schematic structural view of the head when a sealing ring arranged between a connecting rod and a center hole of the turbine shaft is also arranged with a return air channel II;
FIG. 20 is a cutaway schematic structural view along the D-D line in FIG. 1;
FIG. 21 is a cutaway schematic structural view along the C-C line in FIG. 1;
FIG. 22 is a cutaway schematic structural view of the entirety;
FIG. 23 is a cutaway schematic structural view along the G-G line in FIG. 22;
FIG. 24 is a cutaway schematic structural view along the H-H line in FIG. 22; and
FIG. 25 is a cutaway schematic structural view along the I-I line in FIG. 22.

### MODES FOR CARRYING OUT THE INVENTION

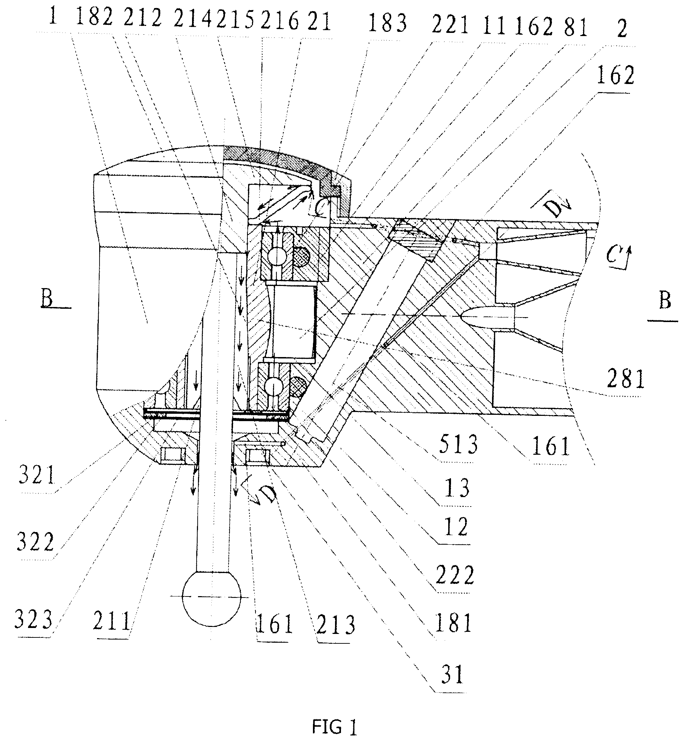

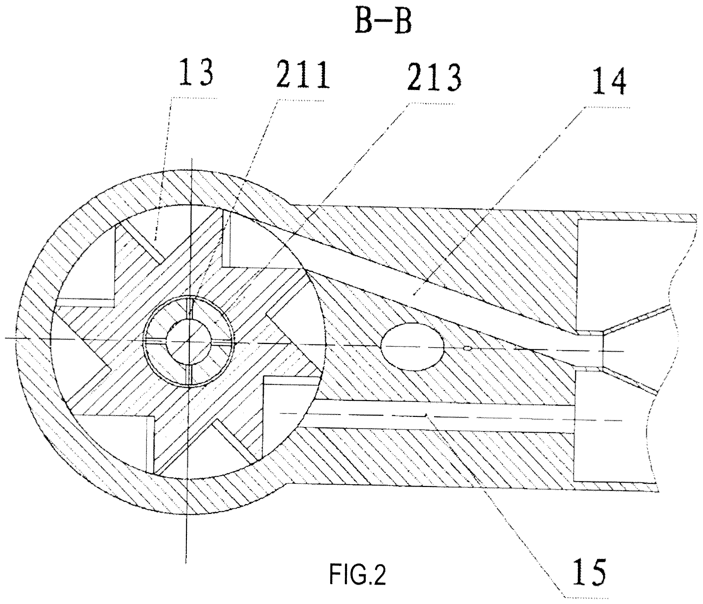

A dental turbine drill comprises a handle and a head that is connected to the handle; as is illustrated in FIG. 1, the head is constituted of a head housing 1 and a core 2 that is arranged within a cavity of the head housing; the head housing 1 is constituted of a head housing wall 181 and a head housing covering 182, while the core 2 is constituted of a connecting shaft turbine and an upper bearing 221 that is fitted at an upper site on a turbine shaft 281 of the connecting shaft turbine as well as a lower bearing 222 that is fitted at a lower site on the turbine shaft 281 of the connecting shaft turbine. The upper bearing 221 is placed on an upper bearing seat 11 inside the head housing, and the lower bearing 222 is placed on a lower bearing seat 12 inside the head housing. The dental turbine drill is characterized by a turbine cavity 13 formed between the upper bearing 221 and the lower bearing 222, and, as is illustrated in FIG. 2, the turbine cavity 13 is provided with an air supply channel 14 and an air return channel 15; the upper part of the upper bearing 221 is an upper air outlet channel and the lower part of the lower bearing 222 is a lower air outlet channel; the site of the connection between the handle and the head housing is a handle neck 81. and both the head housing and the handle are made of a plastic material.

As is illustrated in FIG. 1, a LED surface mount lamp 31 is arranged on the outer periphery of a bur socket on the outside of the head housing wall 181, and the LED surface mount lamp 31 is connected to a power source and a switch, the switch referring to a pneumatic membrane switch provided on the lower air outlet channel.

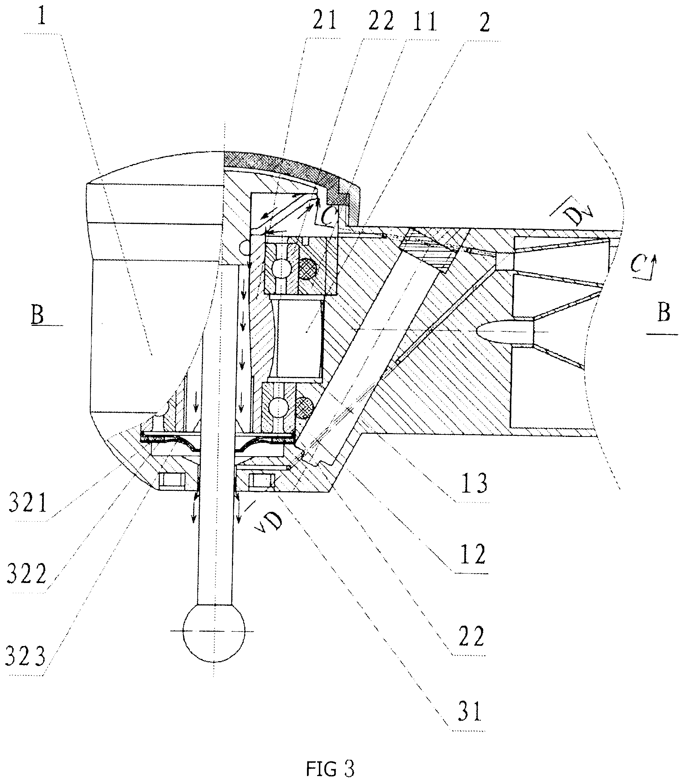

The pneumatic membrane switch is constituted of two membrane rings 322 that are isolated from an annular isolation layer I 321 by a distance that corresponds to the annular isolation layer I 321, projecting blades 323 being arranged in the direction of the ring center of the two membrane rings, where the pneumatic membrane switch is configured to open and close by the contact in FIG. 3 and separation in FIG. 1 between the two corresponding projecting blades 323.

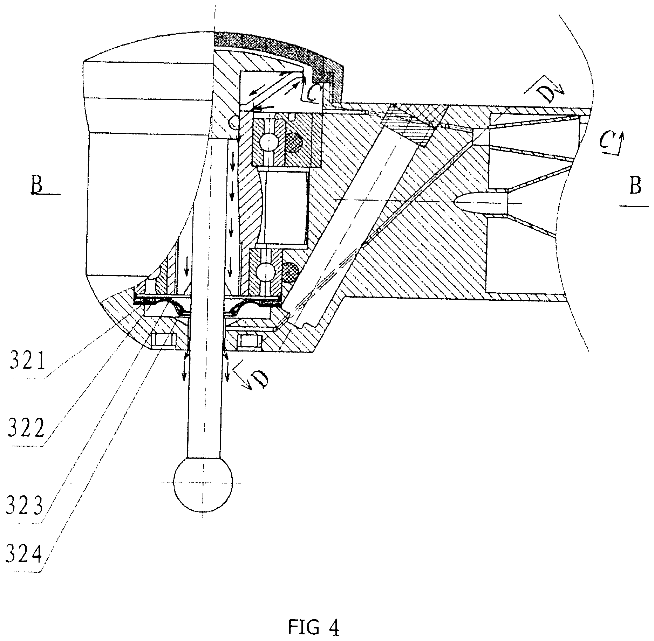

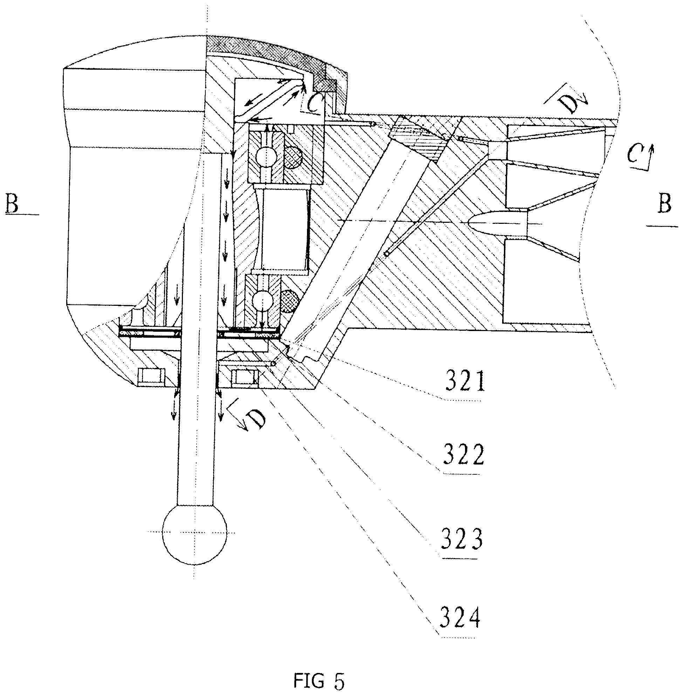

As is illustrated in FIG. 4, a isolation layer II 324 fixs to the two projecting blades 323 approaching the extremity of the ring center. The two projecting blades 323 do not make contact with the isolation part as in FIG. 4, but are separated as in FIG. 5 to constitute the opening and closing of the pneumatic membrane switch.

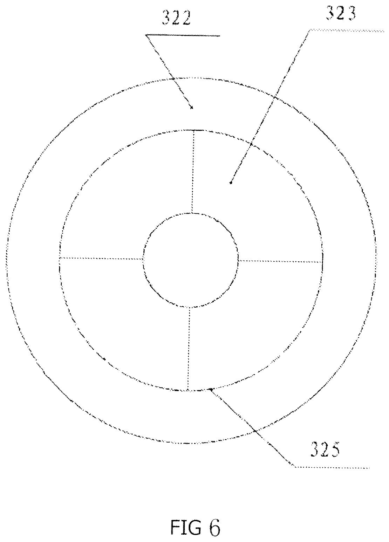

As is illustrated in FIG. 6, the ring width of the two membrane rings isolated from the annular isolation layer I 321 is greater than the ring width of the annular isolation layer I 321, and a T-shaped slit 325 is provided toward the ring center direction along the inside of the annular isolation layer I 321 on the two membrane rings. The projecting blades 323 are configured between the two neighboring T-shaped slits 325. The site to which the annular isolation layer corresponds is the membrane ring 322.

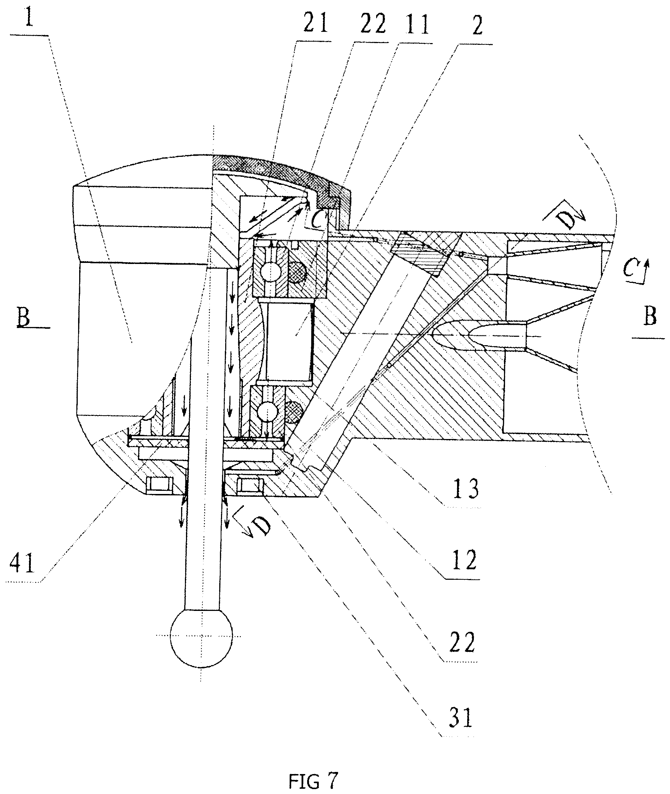

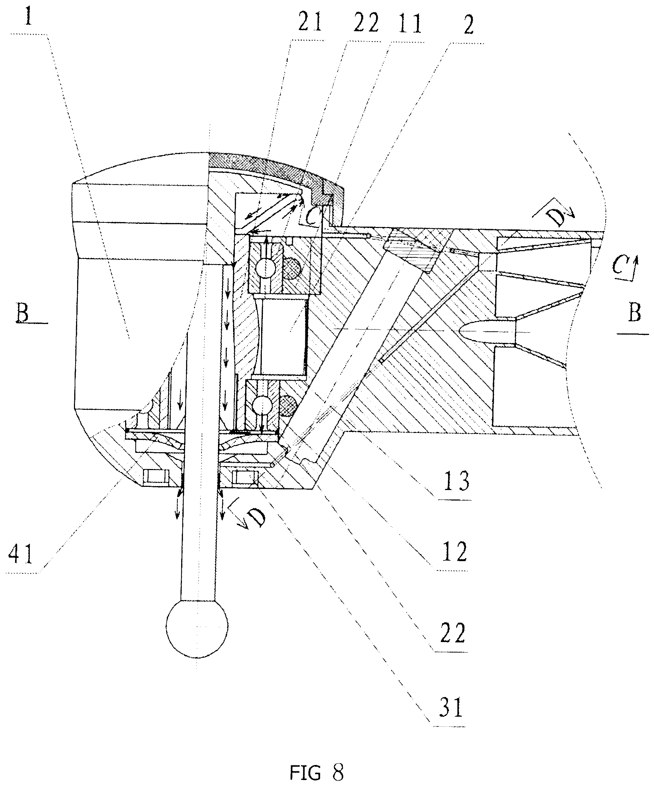

In the above-described dental turbine drill, an annular one-way valve is fixed onto the air outlet channels; as illustrated in FIG. 7, the annular one-way valve is an annular stretched elastic membrane 41. In the natural state, a center hole of the annular stretched elastic membrane 41 holds onto the bur, the depiction showing only the holding of the bur. but the turbine shaft can also be lengthened to allow the center hole to hold onto the turbine shaft. In the working state, as illustrated in FIG. 8, the center hole of the annular stretched elastic membrane is blown away from the bur, but it will be readily understood that the center may also be blown away from the turbine shaft.

The annular stretched elastic membrane 41 is a soft silicone rubber, polyurethane, latex or ordinary rubber. The thickness of the annular stretched elastic membrane 41 is approximately several tens of micrometers to two millimeters.

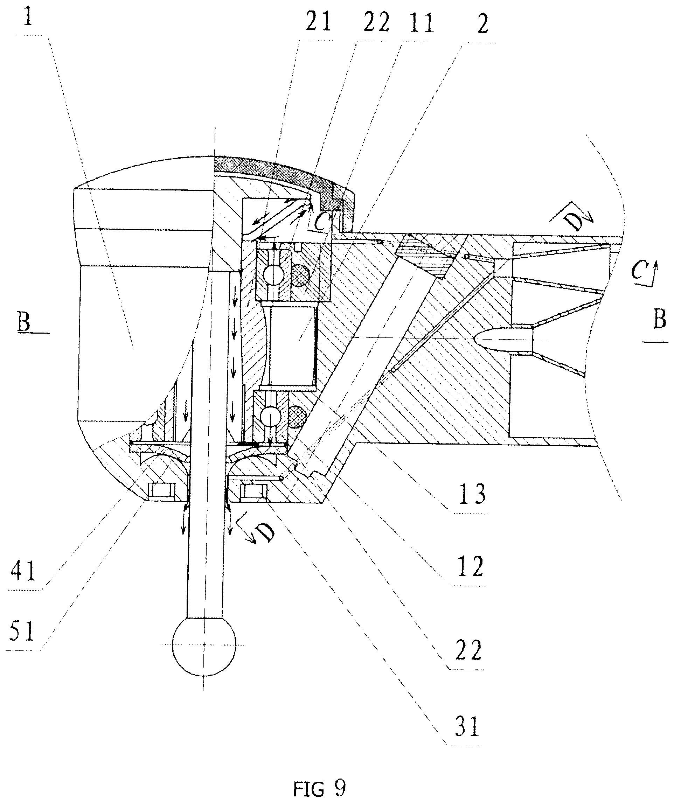

In the natural state, a portion of the lower surface of the annular stretched elastic membrane 41 is separated from the upper surface of the head LED lamp seat 51, and in an air expelling state, as is illustrated in FIG. 9, that portion is in contact with the upper surface of the head LED lamp seat 51, whereby the site of contact between the upper surface of the head LED lamp seat 51 and that portion of the lower surface of the annular stretched elastic membrane 41 constitutes a switch. Under such circumstances, the annular stretched elastic membrane is a conductor, and the upper surface of the LED lamp seat is a conductor.

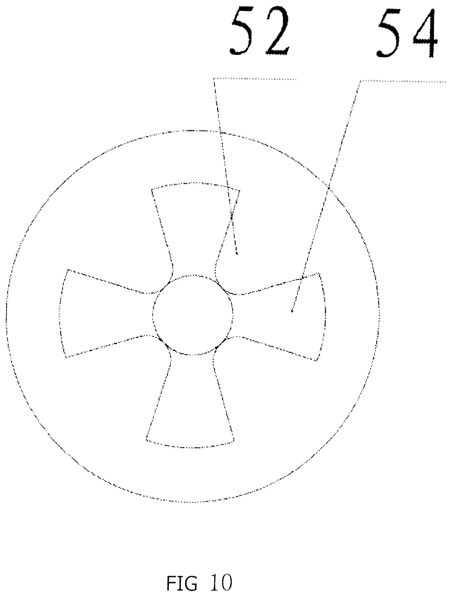

A conductor 52 is arranged on the lower surface of the annular stretched elastic membrane. FIG. 10 is a view of the lower surface of the annular stretched elastic membrane, where the conductor 52 is distributed radially toward the center and has an annular connection to the outer peripheral edge of the annular stretched elastic membrane 41. A conductor is arranged at an upper surface site of the LED lamp seat inside the head. The annular stretched elastic membrane at the site to which the conductor 52 corresponds is thicker, and forms a convexity, while the site where the conductor 52 is not arranged is thinner, and forms a recess 54.

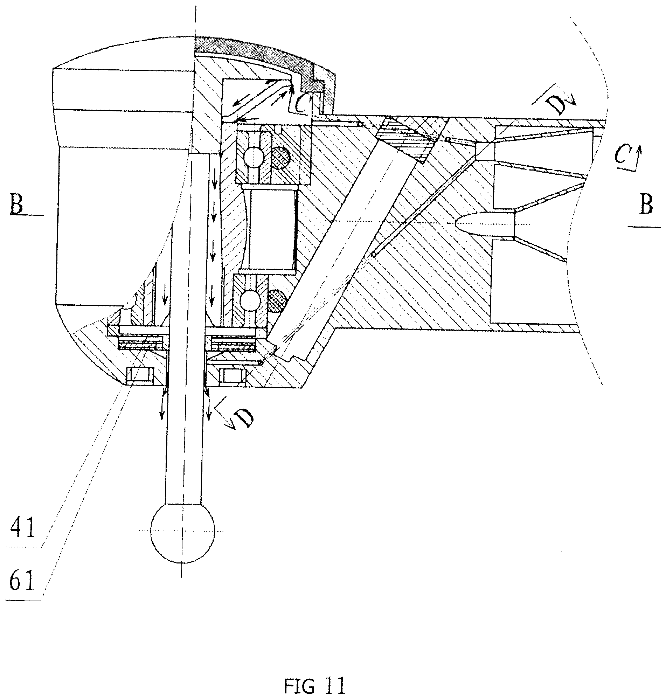

As is illustrated in FIG. 11, an annular pressure membrane switch 61 is arranged below the annular stretched elastic membrane 41.

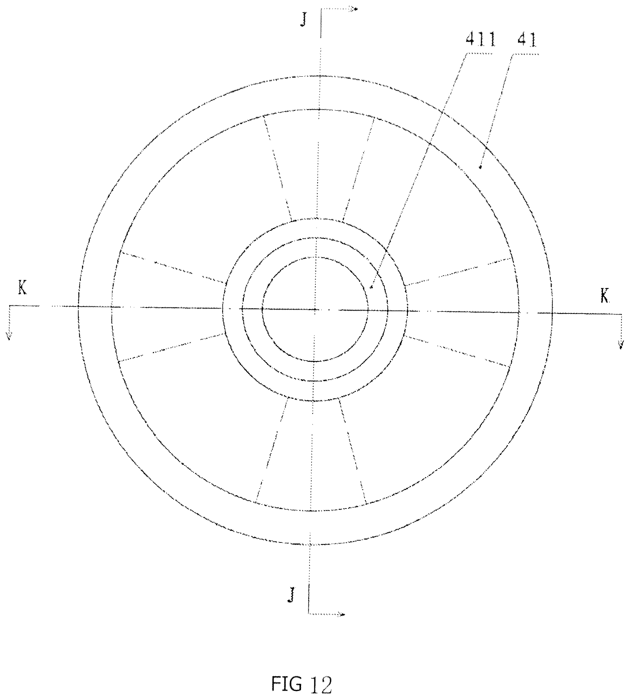

As is illustrated in FIGS. 12 to 14, the annular pressure membrane switch refers to two isolation points 612 arranged between the upper and lower membrane rings 611; the sites of the membrane rings 611 where there is no isolation point 612 contact each other when subjected to pressure but are separated in the natural state, thus constituting the pressure memrane switch.

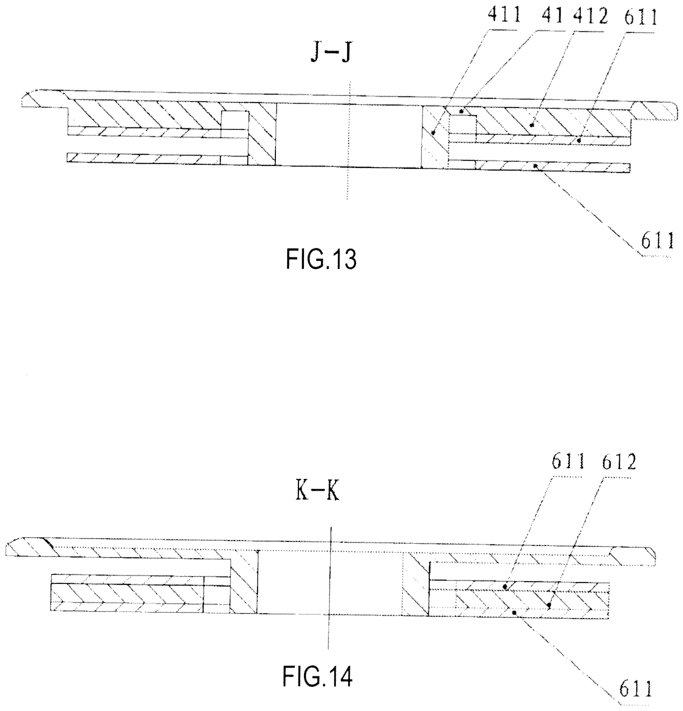

As is illustrated in FIG. 13, the elastic membrane 611 is thicker around the periphery of the center hole, thus forming an annular stand ring 411. A pressure block 412 thinner than the annular stand is arranged on the outside of the annular stand ring 411, and a top part connects the annular stand ring and the pressure block. The pressure block 412 corresponds to a site of the annular membrane switch where no isolation point is arranged. During operation, the airflow pressure applies pressure to the pressure block 412, causing the two elastic rings to come into contact and complete the circuit; when operation is stopped, the pressure block 412 lifts up automatically, thereby separating the two elastic rings 611 and opening the switch.

As is illustrated in FIG. 1, the LED lamp and switch are arranged on a site on the head, and at least a portion of a power source assembly is arranged on a site on the head. Reducing the path link between components makes it possible to simplify the manufacturing process and reduce the number of disposable components.

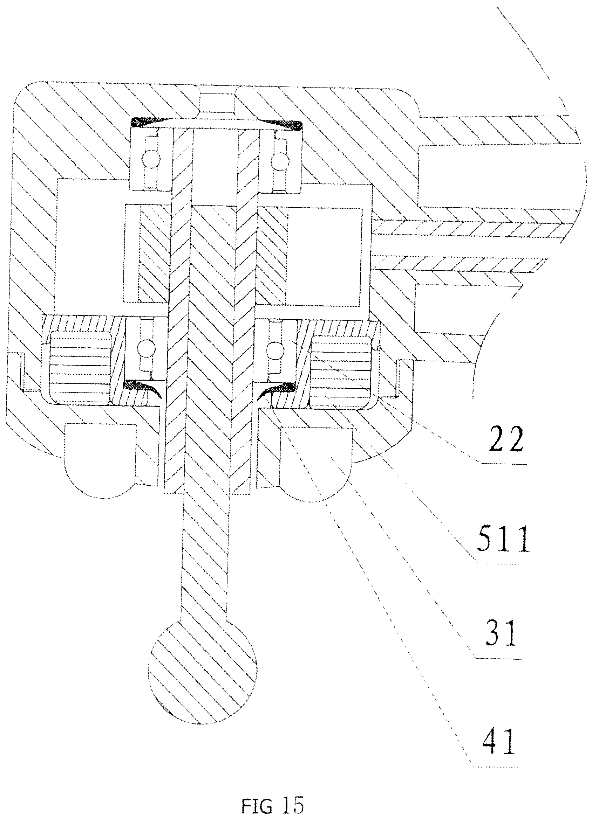

An annular battery 511 power source arranged inside the head is illustrated in FIG. 15.

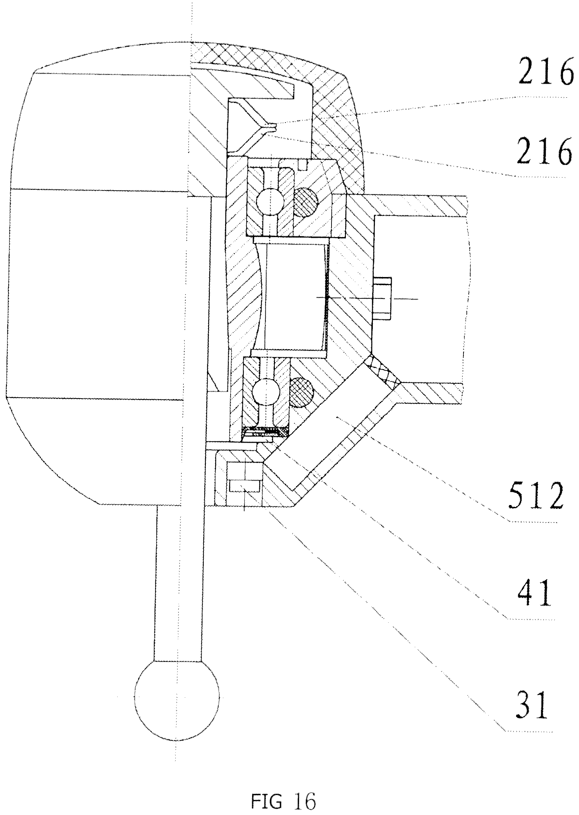

A Sony 337 button battery 512 power source arranged on one side of the neck part of the head is illustrated in FIG. 16.

A pin type battery 513 power source arranged on one side of the neck part of the head is illustrated in FIG. 1. A No. 208 pin type battery is also called a fishing float battery; the No. 208 has a diameter of 2 mm and a length of 8 mm.

As is illustrated in FIG. 1, the turbine drill is a push button dental drill, and the material of the head covering 182 is a rubber-like substance. The rubber-like substance of the head covering is tightly clamped by a clamp 183 on an upper part of the head housing wall 181. The upper bearing seat 11 is screwed into the cavity formed inside the head housing wall 181.

The rubber-like substance of the head covering is a silicone rubber, polyurethane, latex or ordinary rubber.

The dental turbine drill, as is illustrated in FIG. 1, is a push button turbine drill, and a bur pressure clamping mechanism thereof is a tapered hole 212 arranged in the center hole 211 of the turbine shaft 281, a clamping jaw 213 being provided within the center hole 212 of the turbine shaft; along the axial direction of the clamping jaw 213 along the turbine shaft is a wedge shape that is mated to the tapered hole, and an upper part of the clamping jaw 213 and a connecting rod 214 are integrally fixed together. A spring retaining board 215 and the center hole 211 of the turbine shaft, which extends out from the upper part of the connecting rod 214, are integrally fixed together, and a spring 216 is provided between the turbine shaft 281 and the spring retaining board 215 on the outside of the connecting rod 214. The turbine shaft 281, the clamping jaw 213, the connecting rod 214, and the spring retaining board 215 are all plastic pieces. The clamping jaw acts similarly to a conventional spring valve of a three-piece spring for a dental drill, and an advantage of having plastic pieces is that the plastic pieces are less rigid and the shape of the plastic pieces will be modified after being subjected to pressure; this modification will increase the contact surface area and the frictional force between the bur, the wedge, the wind wheel shaft, and the three inner holes. If the wedge breaks, the bur is less prone to fly off.

The spring retaining board 215 is an inertia plate. The inertia plate has a greater diameter than a conventional spring retaining board; by increasing the size of the inertia plate, there is more moment of inertia during rotation; when cutting, a considerable rotational speed can still be retained, and the rotational speed remains stable.

The spring is a butterfly spring or a leaf spring. The butterfly spring and leaf spring both increase the moment of inertia equally.

As is illustrated in FIG. 16, the butterfly spring or leaf spring is arranged so as to snap into relative superposition, and this manner of arrangement increases the pressing stroke.

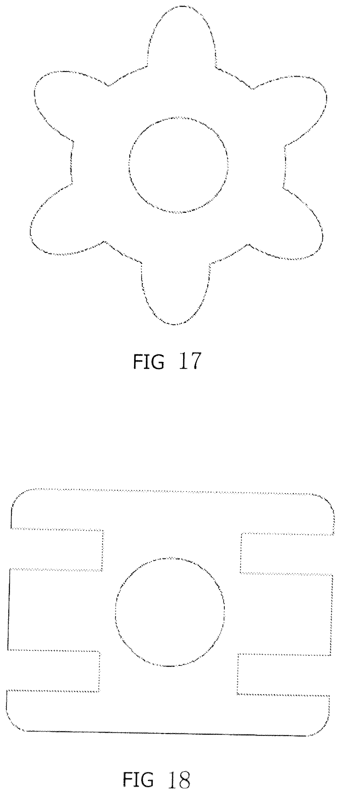

The butterfly spring, as is illustrated in FIG. 17, is a grooved butterfly spring, and the leaf spring, as is illustrated in FIG. 18, is a grooved leaf spring.

When the clamping jaw has clamped onto the bur, an upper end of the center hole of the turbine shaft communicates to the lower end thereof. The communication between the upper end and lower end of the center hole of the turbine shaft means that air flowing from the upper end of the turbine shaft center hole will be able to flow through to the lower end. In such circumstances, when the bur is clamped, there can be communication through the gap between the components as long as the tapered hole portion of the turbine shaft is not sealed.

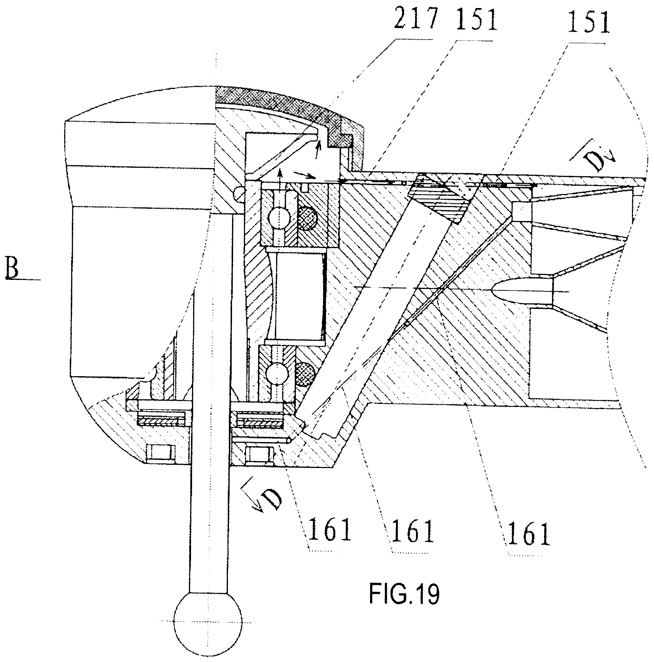

In the dental turbine drill, as is illustrated in FIG. 19, a sealing ring 217 is arranged between the connecting rod and the turbine shaft center hole. A return air channel II 151 that communicates with the return air channel is arranged on the upper air outlet channel. (The reason for arranging the return air channel II such that the return air channel II communicates with the return air channel at the neck part is to lower the temperature of the bearings.) In the present embodiment, the return air channel II enters into the handle, and there is a space on the outside of an air inlet channel pipe and a water ejection channel pipe. The return air channel also enters into this space.

As is illustrated in FIG. 19, a lower water ejection hole 161 is arranged on the lower air outlet channel.

As is illustrated in FIG. 1, an upper water ejection hole 162 and a lower water ejection hole 161 are arranged on the upper and lower air outlet channels; it would also be possible to arrange only the upper water ejection hole 162. The water ejected from the water ejection holes of the lower air outlet channel is atomized by the airflow ejected from the cavity, and is discharged in tandem with the rotation of the turbine shaft or the bur. This makes adequate atomization and cooling of the bur possible. At the same time, there is no dedicated air ejection channel for atomizing water vapor, and since conventional dedicated channels for atomizing water vapor are in communication with an air supply channel supplied by the rotation of the turbine, forgoing the dedicated air ejection channel for atomizing the water vapor makes it possible to avoid suck-back into the air ejection channel; moreover, with the water ejection hole on the upper air outlet channel, since the upper covering is sealed, water and air will flow via the gap between the butterfly spring or leaf spring and the turbine shaft and inertia plate, entering into the gap between the connecting rod and the hole inside the turbine shaft, and then passing through the gap between the wedge to enter into the lower air outlet channel and leave the head. During the described process, the water will be fully atomized. Under such circumstances, the amount of water ejected can be increased, and having the water pass through the gap between the internal components of the center hole of the turbine shaft makes it possible to eject water onto the bur.

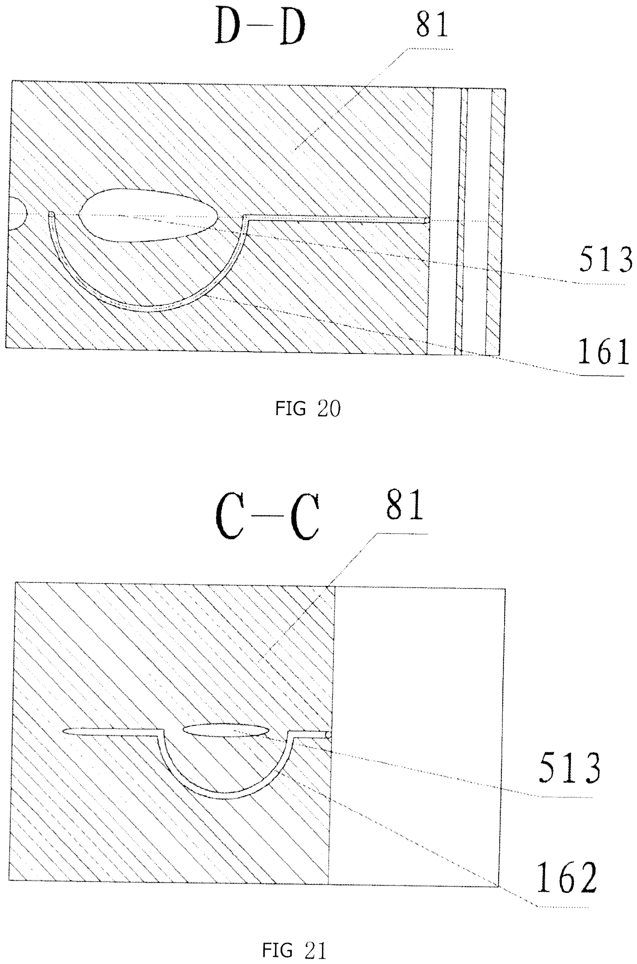

As is illustrated in FIGS. 1, 19, 20, and 21, the upper water ejection hole 162 and the lower water ejection hole 161 are arranged on the inside of the head housing and on the neck of the handle. Situating the water ejection channel on the inside of the head housing wall can be achieved through the use of three-dimensional molding equipment. This embodiment is on the inside of the pipe wall, but in a conventional three-point atomization or multi-point atomization dental drill, an annular channel is arranged below the lower shaft bearing seat, the annular channel communicating with the water ejection channel and a dedicated air ejection channel for atomizing water; thus after water and air have been atomized in the annular channel, the atomized water will be ejected from a spray port arranged on the periphery of the bur. One such example is Chinese Patent Application 200910151521.6, entitled "Disposable spraying high-speed turbine dental handpiece". In the described structure, the dedicated water ejection channel for atomization is extraneous, and when the channel is not provided, the water will be discharged via the spray port and, since high-speed air is sprayed out of the lower air outlet channel, a negative pressure will be formed around the periphery of the bur. The negative pressure causes water to be sucked into the high-speed airflow, and the water is then naturally atomized. This scheme makes use of the airflow of the lower air outlet channel, and similarly is within the scope of protection of the present patent, and is an embodiment of the present invention; having the water of the annular channel directly enter into the lower air outlet channel is also an embodiment of the present invention.

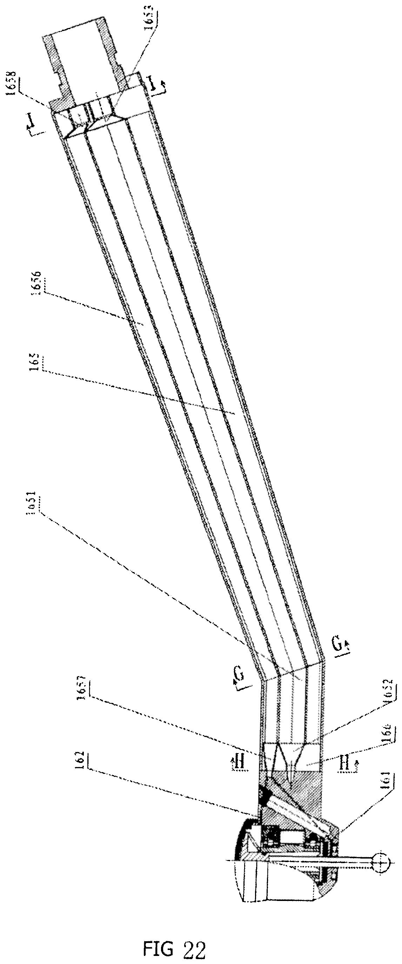

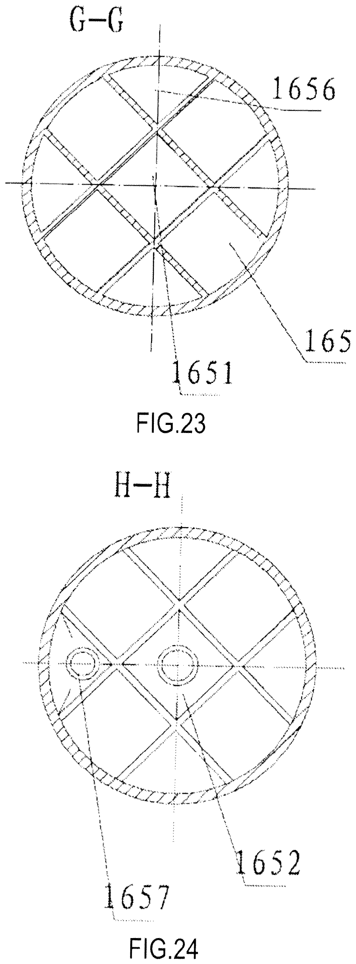

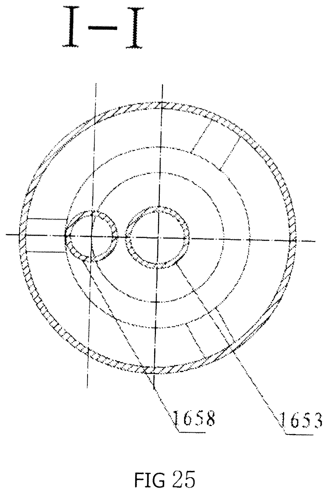

In the dental turbine drill, as is illustrated in FIGS. 22 to 25, within the handle are grid channels 165 arranged along the axial direction of the handle; the grid channels 165 communicate individually with the head and with channels corresponding to the handle plug. Arranging the grid channels within the handle not only provides a supportive function, but also provides passages within the handle. With similar cross-sectional areas and similar numbers of passages, the utilization of the grid channels is highest, as the cross-sectional area of each grid channel is at a maximum. Further, a large number of channels can be arranged, and channels can be reserved for increasing the capabilities of the dental drill.

A grid channel 1651 is an air inlet channel, and an air inlet pipe channel 1652 extending from the grid channel 1651 at the neck part of the handle communicates, as is illustrated in FIG. 2, with the air inlet channel 14 of the head, while an air inlet pipe channel 1653 extending from the rear part of the handle communicates with the air inlet channel of the handle plug. A grid channel 1656 is a water inlet channel, and a water inlet pipe channel 1657 extending from the grid channel 1651 at the neck part of the handle communicates, as is illustrated in FIG. 1. with the water inlet holes 161, 162 of the head, while a water inlet pipe channel 1658 extending from the rear part of the handle communicates with the water inlet channel of the handle plug. The return air channel 15 of the head communicates with the other grid channels via the cavity 166 inside the handle at the neck part, and these grid channels communicate with the return air channel of the plug via the cavity 167 inside the handle at the rear part. The air inlet pipe channel extending from the neck part of the handle from the grid channels communicates with the air inlet channel of the head; the air inlet pipe channel extends from the grid channels, and its shape corresponds to the shape of the grid channels. The shapes of the air inlet pipe channel and the air inlet channel of the head match at their site of communication. For example, if the grid channel is diamond-shaped, and the air inlet channel is round; then, the shape of the air inlet pipe channel will gradually change from diamond-shaped to round.

## Claims

1. A dental turbine drill, comprising: a handle and a head that is connected to the handle, the head being constituted of a head housing (1) and a core (2) that is arranged within a cavity of the head housing, and the head housing (1) being constituted of a head housing wall (181) and a head housing covering (182), the core (2) being constituted of a connecting shaft turbine and an upper bearing (221) and a lower bearing (222) that are fitted at an upper and lower site on a turbine shaft (281) of the connecting shaft turbine, the upper bearing (221) and the lower bearing (222) being placed onto corresponding bearing seats (11, 12) inside the head housing (1), wherein a turbine cavity (13) is formed between the upper bearing (221) and the lower bearing (222), the turbine cavity (13) being provided with an air supply channel (14) and an air return channel (15), the upper part of the upper bearing seat (11) is an upper air outlet channel and the lower part of the lower bearing seat (12) is a lower air outlet channel, and the site of the connection between the handle and the head housing (1) is a handle neck (81), both the head housing (1) and the handle being made of a plastic material, **characterized in that**: the turbine drill is a push button turbine drill, the material of the head covering (182) is a rubber-like substance, and the head covering of the rubber-like substance is tightly clamped by a collar on an upper part of the head housing wall (181); the head covering of the rubber-like substance is a silicon rubber, polyurethane, latex, or ordinary rubber, an annular one-way valve is fixed onto the air outlet channels, the annular one-way valve being an annular stretched elastic membrane (41), where in the natural state, a center hole of the annular stretched elastic membrane (41) holds onto the turbine shaft (281) or holds onto the bur, and in the working state, the center hole of the annular stretched elastic membrane (41) is blown away from the turbine shaft (281) or is blown away from the burr, a LED surface mount lamp (31) is arranged on the outer periphery of a bur socket on the outside of the head housing wall (181), and the LED surface mount lamp (31) is connected to a power source and a switch, the switch referring to a annular pressure membrane switch (61) provided on the lower air outlet channel, said annular pressure membrane switch being arranged below the annular stretched elastic membrane; the annular pressure membrane switch (61) constitutes at least two isolated points (612) arranged between an upper elastic ring and a lower elastic ring (611); the sites where there is not an isolated point are in pressurized contact, so that there is separation in the natural state, whereby a pressure membrane switch is constituted.

2. The dental turbine drill as set forth in claim 1, **characterized in that**: the turbine drill is a push button turbine drill, in which a bur pressure clamping mechanism is a tapered hole (212) arranged on the center hole (211) of the turbine shaft (281), a clamping jaw (213) being provided within the center hole (211) of the turbine shaft (281), where the clamping jaw (213) has a wedge shape along the axial direction of the turbine shaft (281) that is mated to the tapered hole (212); an upper part of the clamping jaw (213) is integrally fixed to a connecting rod (214) and an upper part of the connecting rod (214) extends out of the center hole (211) of the turbine shaft (281) and is integrally fixed to a spring retaining board (215); a spring (216) being provided between the turbine shaft (281) and the spring retaining board (215) on the outside of the connecting rod (214); the turbine shaft (281), the clamping jaw (213), the connecting rod (214), and the elastic spring are all plastic pieces.

3. The dental turbine drill as set forth in claim 2, **characterized in that**: the spring retaining board (215) is an inertia disc.

4. The dental turbine drill as set forth in claim 3, **characterized in that**: the spring (216) is a butterfly spring or a leaf spring.

5. The dental turbine drill as set forth in claim 4, **characterized in that**: the butterfly spring or the leaf spring is arranged so as to have a relative snap superposition.

6. The dental turbine drill as set forth in claims 4 or 5, **characterized in that**: the butterfly spring is a grooved butterfly spring, or the leaf spring is a grooved leaf spring.

7. The dental turbine drill as set forth in any of claims 1 to 6, **characterized in that**: a water ejection hole (161) is arranged on the lower air outlet channel.

## Patentansprüche

1. Zahnärztlicher Turbinenbohrer, umfassend: einen Griff und einen Kopf, der mit dem Griff verbunden ist, wobei der Kopf aus einem Kopfgehäuse (1) und einem Kern (2) besteht, der innerhalb eines Hohlraums des Kopfgehäuses angeordnet ist, und das Kopfgehäuse (1) aus einer Kopfgehäusewand (181) und einer Kopfgehäuseabdeckung (182) besteht, wobei der Kern (2) aus einer Verbindungswellenturbine und einem oberen Lager (221) und einem unteren Lager (222) besteht, die an einer oberen und einer unteren Stelle auf einer Turbinenwelle (281) der Verbindungswellenturbine montiert sind, wobei das obere Lager (221) und das untere Lager (222) auf entsprechenden Lagersitzen (11, 12) innerhalb des Kopfgehäuses (1) platziert sind, wobei zwischen dem oberen Lager (221) und dem unteren Lager (222) ein Turbinenhohlraum (13) ausgebildet ist, wobei der Turbinenhohlraum (13) mit einem Luftzufuhrkanal (14) und einem Luftrückführungskanal (15) versehen ist, wobei der obere Teil des oberen Lagersitzes (11) ein oberer Luftauslasskanal ist und der untere Teil des unteren Lagersitzes (12) ein unterer Luftauslasskanal ist, und die Stelle der Verbindung zwischen dem Griff und dem Kopfgehäuse (1) ein Griffhals (81) ist, wobei sowohl das Kopfgehäuse (1) als auch der Griff aus einem Kunststoffmaterial hergestellt sind, **dadurch gekennzeichnet, dass**: der Turbinenbohrer ein Druckknopf-Turbinenbohrer ist, das Material der Kopfabdeckung (182) eine gummiartige Substanz ist und die Kopfabdeckung der gummiartigen Substanz durch eine Schelle an einem oberen Teil der Kopfgehäusewand (181) festgeklemmt ist, die Kopfabdeckung der gummiartigen Substanz ein Silikonkautschuk, Polyurethan, Latex oder gewöhnlicher Kautschuk ist, ein ringförmiges Einwegventil an den Luftauslasskanälen befestigt ist, wobei das ringförmige Einwegventil eine ringförmige, gedehnte, elastische Membran (41) ist, wobei im natürlichen Zustand ein Mittelloch der ringförmigen, gedehnten, elastischen Membran (41) sich an der Turbinenwelle (281) festhält oder sich an dem Bohrer festhält, und im Arbeitszustand das Mittelloch der ringförmigen, gedehnten, elastischen Membran (41) von der Turbinenwelle (281) weggeblasen wird oder von dem Bohrer weggeblasen wird, eine oberflächenmontierte LED-Leuchte (31) am Außenumfang einer Bohrerfassung auf der Außenseite der Kopfgehäusewand (181) angeordnet ist und die oberflächenmontierte LED-Leuchte (31) mit einer Stromquelle und einem Schalter verbunden ist, wobei sich der Schalter auf einen ringförmigen Druckmembranschalter (61) bezieht, der an dem unteren Luftauslasskanal bereitgestellt ist, wobei der ringförmige Druckmembranschalter unterhalb der ringförmigen, gedehnten, elastischen Membran angeordnet ist, der ringförmige Druckmembranschalter (61) aus mindestens zwei isolierten Punkten (612) besteht, die zwischen einem oberen elastischen Ring und einem unteren elastischen Ring (611) angeordnet sind, die Stellen, wo es keinen isolierten Punkt gibt, sich in druckbeaufschlagtem Kontakt befinden, so dass im natürlichen Zustand eine Trennung vorliegt, wodurch ein Druckmembranschalter gebildet wird.

2. Zahnärztlicher Turbinenbohrer nach Anspruch 1, **dadurch gekennzeichnet, dass**: der Turbinenbohrer ein Druckknopf-Turbinenbohrer ist, bei dem ein Bohrer-Druckklemmmechanismus ein konisches Loch (212) ist, das an dem Mittelloch (211) der Turbinenwelle (281) angeordnet ist, eine Klemmbacke (213) innerhalb des Mittellochs (211) der Turbinenwelle (281) bereitgestellt ist, wobei die Klemmbacke (213) entlang der axialen Richtung der Turbinenwelle (281) eine Keilform aufweist, die mit dem konischen Loch (212) zusammenpasst, ein oberer Teil der Klemmbacke (213) integral an einer Verbindungsstange (214) befestigt ist und ein oberer Teil der Verbindungsstange (214) sich aus dem Mittelloch (211) der Turbinenwelle (281) heraus erstreckt und integral an einer Federhalteplatte (215) befestigt ist, eine Feder (216) zwischen der Turbinenwelle (281) und der Federhalteplatte (215) an der Außenseite der Verbindungsstange (214) bereitgestellt ist, die Turbinenwelle (281), die Klemmbacke (213), die Verbindungsstange (214) und die elastische Feder alle Kunststoffteile sind.

3. Zahnärztlicher Turbinenbohrer nach Anspruch 2, **dadurch gekennzeichnet, dass**: die Federhalteplatte (215) eine Trägheitsscheibe ist.

4. Zahnärztlicher Turbinenbohrer nach Anspruch 3, **dadurch gekennzeichnet, dass**: die Feder (216) eine Schmetterlingsfeder oder eine Blattfeder ist.

5. Zahnärztlicher Turbinenbohrer nach Anspruch 4, **dadurch gekennzeichnet, dass**: die Schmetterlingsfeder oder die Blattfeder so angeordnet ist, dass sie eine relative Einrastüberlagerung aufweist.

6. Zahnärztlicher Turbinenbohrer nach Anspruch 4 oder 5, **dadurch gekennzeichnet, dass**: die Schmetterlingsfeder eine gerillte Schmetterlingsfeder ist oder die Blattfeder eine gerillte Blattfeder ist.

7. Zahnärztlicher Turbinenbohrer nach einem der Ansprüche 1 bis 6, **dadurch gekennzeichnet, dass**: ein Wasserausstoßloch (161) am unteren Luftauslasskanal angeordnet ist.

## Revendications

1. Fraise dentaire à turbine comprenant : une poignée et une tête qui est raccordée à la poignée, la tête étant constituée d'un logement de tête (1) et d'un noyau (2) qui est agencé à l'intérieur d'une cavité du logement de tête, et le logement de tête (1) étant constitué d'une paroi de logement de tête (181) et d'un couvercle de logement de tête (182), le noyau (2) étant constitué d'une turbine d'arbre de raccordement et d'un palier supérieur (221) et d'un palier inférieur (222) qui sont montés sur un site supérieur et un site inférieur sur un arbre de turbine (281) de la turbine d'arbre de raccordement, le palier supérieur (221) et le palier inférieur (222) étant placés sur des sièges de palier (11, 12) correspondants à l'intérieur du logement de tête (1), dans laquelle une cavité de turbine (13) est formée entre le palier supérieur (221) et le palier inférieur (222), la cavité de turbine (13) étant prévue avec un canal d'alimentation en air (14) et un canal de retour d'air (15), la partie supérieure du siège de palier supérieur (11) est un canal de sortie d'air supérieur et la partie inférieure du siège de palier inférieur (12) est un canal de sortie d'air inférieur et le site du raccordement entre la poignée et le logement de tête (1) est un col de poignée (81), à la fois le logement de tête (1) et la poignée étant réalisés à partir d'une matière plastique, **caractérisée en ce que** : la fraise à turbine est une fraise à turbine à bouton poussoir, le matériau du couvercle de tête (182) est une substance de type caoutchouc, et le couvercle de tête en substance de type caoutchouc est étroitement serré par un collier sur une partie supérieure de la paroi de logement de tête (181) ; le couvercle de tête en substance de type caoutchouc est un caoutchouc de silicone, un polyuréthane, un latex ou un caoutchouc ordinaire, une valve à une voie annulaire est fixée sur les canaux de sortie d'air, la valve à une voie annulaire étant une membrane élastique étirée annulaire (41), où à l'état naturel, un trou central de la membre élastique étirée annulaire (41) s'accroche à l'arbre de turbine (281) ou s'accroche sur la fraise, et à l'état de travail, le trou central de la membrane élastique étirée annulaire (41) est projeté loin de l'arbre de turbine (281) ou est projeté loin de la fraise, une lampe de montage de surface de LED (31) est agencée sur la périphérie externe d'une douille de fraise à l'extérieur de la paroi de logement de tête (181), et la lampe de montage de surface de LED (31) est raccordée à une source d'énergie et à un commutateur, le commutateur faisant référence à un commutateur à membrane de pression annulaire (61) prévu sur le canal de sortie d'air inférieur, ledit commutateur à membrane de pression annulaire étant agencé au-dessous de la membrane élastique étirée annulaire ; le commutateur à membrane à pression annulaire (61) constitue au moins deux points isolés (612) agencés entre une bague élastique supérieure et une bague élastique inférieure (611) ; les sites où il n'y a pas de point isolé sont en contact de pression, de sorte qu'il y a une séparation à l'état naturel, moyennant quoi un commutateur à membrane de pression est constitué.

2. Fraise dentaire à turbine selon la revendication 1, **caractérisée en ce que** : la fraise à turbine est une fraise à turbine à bouton poussoir, dans laquelle un mécanisme de changement de pression de fraise est un trou progressivement rétréci (212) agencé sur le trou central (211) de l'arbre de turbine (281), une mâchoire de serrage (213) étant prévue à l'intérieur du trou central (211) de l'arbre de turbine (281), où la mâchoire de serrage (213) a une forme de cale le long de la direction axiale de l'arbre de turbine (281) qui est couplée au trou progressivement rétréci (212) ; une partie supérieure de la mâchoire de serrage (213) est fixée de manière solidaire à une tige de raccordement (214) et une partie supérieure de la tige de raccordement (214) s'étend hors du trou central (211) de l'arbre de turbine (281) et est fixée de manière solidaire à une plaque de retenue de ressort (215) ; un ressort (216) étant prévu entre l'arbre de turbine (281) et la plaque de retenue de ressort (215) à l'extérieur de la tige de raccordement (214) ; l'arbre de turbine (281), la mâchoire de serrage (213), la tige de raccordement (214), et le ressort élastique sont tous des pièces en plastique.

3. Fraise dentaire à turbine selon la revendication 2, **caractérisée en ce que** : la plaque de retenue de ressort (215) est un disque d'inertie.

4. Fraise dentaire à turbine selon la revendication 3, **caractérisée en ce que** : le ressort (216) est un ressort papillon ou un ressort à lames.

5. Fraise dentaire à turbine selon la revendication 4, **caractérisée en ce que** : le ressort papillon ou le ressort à lames est agencé afin d'avoir une superposition d'encliquetage relative.

6. Fraise dentaire à turbine selon les revendications 4 ou 5, **caractérisée en ce que** : le ressort papillon est un ressort papillon à rainures, ou le ressort à lames est un ressort à lames à rainures.

7. Fraise dentaire à turbine selon l'une quelconque des revendications 1 à 6, **caractérisée en ce que** : un trou d'éjection d'eau (161) est agencé sur le canal de sortie d'air inférieur.
